(19) **Europäisches Patentamt / European Patent Office / Office européen des brevets**

(11) **EP 4 722 680 A1**

(12) **EUROPEAN PATENT APPLICATION**
published in accordance with Art. 153(4) EPC

(43) Date of publication:
08.04.2026 Bulletin 2026/15

(21) Application number: 24772198.8

(22) Date of filing: 15.01.2024

(51) International Patent Classification (IPC):
*G01M 13/028* (2019.01)    *F16H 25/24* (2006.01)
*G01H 17/00* (2006.01)

(52) Cooperative Patent Classification (CPC):
**F16H 25/24; G01H 17/00; G01M 13/028**

(86) International application number:
**PCT/JP2024/000794**

(87) International publication number:
**WO 2024/241622 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  25.05.2023  JP 2023086157

(71) Applicant: **NSK Ltd.**
**Tokyo 141-8560 (JP)**

(72) Inventor: **HASHIMOTO, Satoshi**
**Fujisawa-shi, Kanagawa 2518501 (JP)**

(74) Representative: **Grünecker Patent- und Rechtsanwälte PartG mbB Leopoldstraße 4 80802 München (DE)**

(54) **ABNORMALITY DIAGNOSIS DEVICE AND ABNORMALITY DIAGNOSIS METHOD FOR BALL SCREW**

(57)    To provide an abnormality diagnosis device and an abnormality diagnosis method for a ball screw that can detect an abnormality such as damage or wear that has occurred in a screw shaft. An abnormality diagnosis device for a ball screw includes a vibration sensor (21) that detects vibration during an operation of the ball screw, a filter processing unit (23) that executes, on a vibration signal acquired by the vibration sensor (21), filtering processing for extracting a frequency band including at least a characteristic frequency corresponding to a specific frequency of the ball screw, an envelope processing unit (241) that executes envelope processing for a vibration signal after the filtering processing, a frequency analysis processing unit (242) that executes fast Fourier transform processing on a time domain signal after the envelope processing, a peak hold averaging processing unit (243) that executes peak hold averaging processing for frequency domain data for each sampling period in the fast Fourier transform processing, and an abnormality determination unit (25) that performs abnormality determination for the ball screw based on the frequency domain data after the peak hold averaging processing.

## FIG.2

## Description

Field

The present invention relates to an abnormality diagnosis device and an abnormality diagnosis method for a ball screw.

Background

Patent Literature 1 discloses an abnormality diagnosis device and an abnormality diagnosis method for machine equipment. In Patent Literature 1, a vibration signal of mechanical equipment is subjected to filter processing to execute envelope processing, and abnormality diagnosis is performed based on the magnitude (signal intensity) of a frequency spectrum of a characteristic frequency component corresponding to a specific frequency of a bearing or a gear after fast Fourier transform (FFT) processing. In such vibration analysis processing using FFT, in general, an SN ratio is improved by executing arithmetic means processing for data after the FFT processing acquired in a plurality of periods corresponding to required frequency resolution. On the other hand, Patent Literature 2 discloses an abnormality determination method for a ball screw using a frequency component equal to or less than a specific frequency of a nut configuring the ball screw in abnormality determination based on vibration during operation of the ball screw.

Citation List

Patent Literature

  Patent Literature 1: Japanese Patent No. 4581860
  Patent Literature 2: Japanese Patent No. 5217743 Summary

Technical Problem

Damage or wear of a bearing or a nut of a ball screw can be determined by, for example, applying vibration analysis processing using FFT described in Patent Literature 1. However, in order to determine damage or wear of a screw shaft of the ball screw, it is necessary to move the nut over the entire region of the screw shaft. Therefore, when the vibration analysis processing using the FFT is applied, data after the FFT processing acquired a plurality of times is data at different positions of the screw shaft. For this reason, a specific frequency (a characteristic frequency component) generated because of an abnormality of the screw shaft is attenuated by the arithmetic mean processing after the FFT processing. It is likely that an abnormality such as damage or wear that has occurred in a part of the screw shaft cannot be detected.
The present invention has been made in view of the problems described above, and an object of the present invention is to provide an abnormality diagnosis device and an abnormality diagnosis method for a ball screw that can detect an abnormality such as damage or wear that has occurred in a screw shaft.

Solution to Problem

To achieve the above object, an abnormality diagnosis device for a ball screw according to an embodiment of the present invention, the abnormality diagnosis device comprising:

  a vibration sensor that detects vibration during an operation of the ball screw;
  a filter processing unit that executes, on a vibration signal acquired by the vibration sensor, filtering processing for extracting a frequency band including at least a characteristic frequency corresponding to a specific frequency of the ball screw;
  an envelope processing unit that executes envelope processing for the vibration signal after the filtering processing;
  a frequency analysis processing unit that executes fast Fourier transform processing on a time domain signal after the envelope processing;
  a peak hold averaging processing unit that executes peak hold averaging processing for frequency domain data for each sampling period in the fast Fourier transform processing; and
  an abnormality determination unit that performs abnormality determination for the ball screw based on the frequency domain data after the peak hold averaging processing.

With the configuration explained above, it is possible to execute abnormality determination processing for the ball screw using maximum signal intensity for each frequency line of the frequency domain data acquired for each sampling period during the operation of the ball screw. Accordingly, it is possible to detect an abnormality such as damage or wear that has occurred in the screw shaft of the ball screw.

As a desirable embodiment of the abnormality diagnosis device for the ball screw, wherein

it is preferable that the abnormality determination unit
extracts, based on a rotational frequency of a screw shaft of the ball screw, signal intensity corresponding to a damage frequency of the screw shaft and outputs an abnormality determination result of the screw shaft when the signal intensity exceeds a predetermined threshold.

Accordingly, it is possible to output a diagnosis result of determining an abnormality assuming that an abnormality due to damage or wear has occurred in the screw shaft of the ball screw.

As a desirable embodiment of the abnormality diagnosis device for the ball screw, wherein

it is preferable that the abnormality determination unit
extracts a maximum value of signal intensity within a predetermined range including a damage frequency of a screw shaft of the ball screw and outputs an abnormality determination result of the screw shaft when the maximum value exceeds a predetermined threshold.

Accordingly, it is possible to output a diagnosis result of determining an abnormality assuming that an abnormality due to damage or wear has occurred in the screw shaft of the ball screw.

An abnormality diagnosis method for a ball screw according to an embodiment of the present invention, the abnormality diagnosis method comprising:

a first step of detecting vibration during an operation of the ball screw;
a second step of executing, on a vibration signal acquired in the first step, filtering processing of extracting a frequency band including at least a characteristic frequency corresponding to a specific frequency of the ball screw;
a third step of executing envelope processing for the vibration signal after the filtering processing;
a fourth step of executing fast Fourier transform processing on a time domain signal after the envelope processing;
a fifth step of executing peak hold averaging processing for frequency domain data for each sampling period in the fast Fourier transform processing; and
a sixth step of performing abnormality determination for the ball screw based on the frequency domain data after the peak hold averaging processing.

With the configuration explained above, it is possible to execute abnormality determination processing for the ball screw using maximum signal intensity for each frequency line of the frequency domain data acquired for each sampling period during the operation of the ball screw. Accordingly, it is possible to detect an abnormality such as damage or wear that has occurred in the screw shaft.

As a desirable embodiment of the abnormality diagnosis method for the ball screw, wherein

it is preferable that in the sixth step,
based on a rotational frequency of a screw shaft of the ball screw, signal intensity corresponding to a damage frequency of the screw shaft is extracted, and an abnormality determination result of the screw shaft is output when the signal intensity exceeds a predetermined threshold.

Accordingly, it is possible to output a diagnosis result of determining an abnormality assuming that an abnormality due to damage or wear has occurred in the screw shaft of the ball screw.

As a desirable embodiment of the abnormality diagnosis method for the ball screw, wherein

it is preferable that in the sixth step,
a maximum value of signal intensity within a predetermined range including a damage frequency of a screw shaft of the ball screw is extracted, and an abnormality determination result of the screw shaft is output when the maximum value exceeds a predetermined threshold.

Accordingly, it is possible to output a diagnosis result of determining an abnormality assuming that an abnormality due to damage or wear has occurred in the screw shaft of the ball screw.

Advantageous Effects of Invention

According to the present invention, it is possible to obtain an abnormality diagnosis device and an abnormality diagnosis method for a ball screw that can detect an abnormality such as damage or wear that has occurred in a screw shaft.

Brief Description of Drawings

FIG. 1 is a diagram illustrating an example of a schematic configuration of an abnormality diagnosis system for a ball screw.
FIG. 2 is a block diagram illustrating an example of an abnormality diagnosis device for a ball screw according to an embodiment.
FIG. 3 is an image diagram schematically illustrating a vibration signal acquired in abnormality diagnosis processing according to the embodiment.
FIG. 4 is a diagram illustrating a specific example of the vibration signal acquired in the abnormality diagnosis processing according to the embodiment.
FIG. 5A is a schematic diagram illustrating an example of frequency domain data acquired by FFT processing.
FIG. 5B is a schematic diagram illustrating an example of frequency domain data acquired by the FFT processing.
FIG. 6 is a schematic diagram illustrating an example of frequency domain data after arithmetic mean processing.
FIG. 7 is a schematic diagram illustrating an example of frequency domain data after peak hold averaging processing.
FIG. 8 is a flowchart illustrating an example of abnormality diagnosis processing for a ball screw according to the embodiment.
FIG. 9 is a sub-flowchart illustrating an example of the peak hold averaging processing.

Description of Embodiments

A mode for carrying out the invention (hereinafter, referred to as embodiment) is explained in detail below with reference to the drawings. Note that the present invention is not limited by the embodiment explained below. Constituent elements in the embodiment explained below include those that can be easily assumed by those skilled in the art, those that are substantially the same, and those within a scope of equivalents. Further, the constituent elements disclosed in the embodiment explained below can be combined as appropriate.

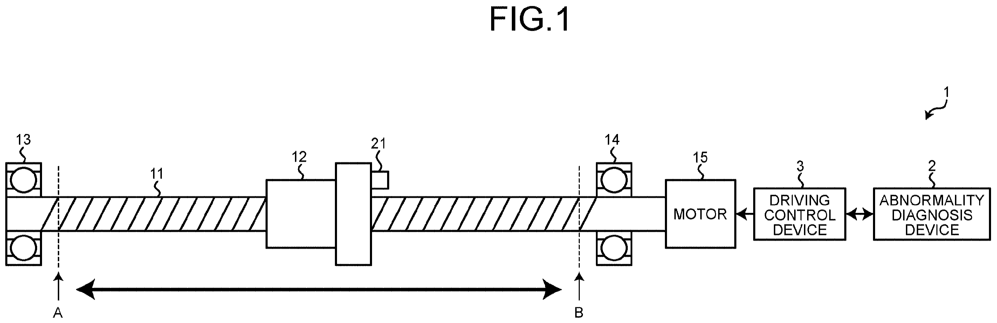

FIG. 1 is a diagram illustrating an example of a schematic configuration of an abnormality diagnosis system for a ball screw. A ball screw 1 includes a screw shaft 11 and a nut 12 outfitted in a screw shaft 11 to be capable of sliding via a plurality of rolling bodies (not illustrated).

Both ends of the screw shaft 11 are respectively rotatably supported by bearings 13 and 14. One end side (the right side in FIG. 1) of the screw shaft 11 is coupled to an output shaft of a motor 15 for driving. According to rotation of the screw shaft 11, the nut 12 linearly moves in the axial direction of the screw shaft 11 (an arrow direction illustrated in FIG. 1) between an A end and a B end illustrated in FIG. 1.

In the present disclosure, an abnormality diagnosis device 2 for the ball screw 1 according to the embodiment executes vibration analysis processing during the operation of the ball screw 1 and diagnoses damage and wear of the screw shaft 11. Specifically, when executing abnormality diagnosis processing for the ball screw 1 according to the embodiment, the abnormality diagnosis device 2 outputs a driving control command and a rotation control command for the motor 15 to a driving control device 3. The driving control device 3 drives the motor 15 based on the control commands from the abnormality diagnosis device 2 to cause the ball screw 1 to operate and moves the nut 12 over the entire region of the screw shaft 11. The driving control device 3 outputs a rotational frequency of the motor 15, in other words, the rotational frequency of the screw shaft 11 of the ball screw 1, to the abnormality diagnosis device 2.

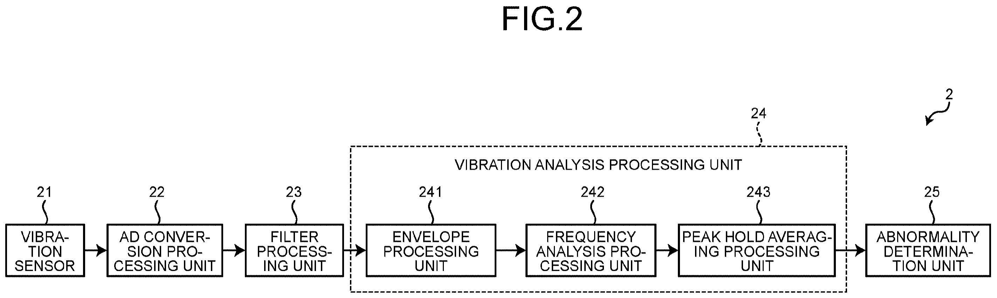

FIG. 2 is a block diagram illustrating an example of an abnormality diagnosis device for a ball screw according to an embodiment. As illustrated in FIG. 2, the abnormality diagnosis device 2 for the ball screw according to the embodiment includes a vibration sensor 21, an AD conversion processing unit 22, a filter processing unit 23, a vibration analysis processing unit 24, and an abnormality determination unit 25.

The vibration sensor 21 is installed, for example, in the nut 12 of the ball screw 1 illustrated in FIG. 1. In the present disclosure, an acceleration sensor such as an acceleration pickup is exemplified as the vibration sensor 21. An acceleration detection direction by the vibration sensor 21 may be the axial direction of the screw shaft 11 (an arrow direction illustrated in FIG. 1) or may be a direction orthogonal to the axial direction of the screw shaft 11. An installation part of the vibration sensor 21 only has to be a place where the vibration sensor 21 can detect vibration at the operation time of the ball screw 1 and is not limited to the nut 12. Further, the vibration sensor 21 is not limited to the acceleration sensor. The vibration sensor 21 may be, for example, a displacement sensor or a sound pressure sensor of a microphone or the like.

The AD conversion processing unit 22 converts a vibration signal detected by the vibration sensor 21 into digital data.

The filter processing unit 23 performs predetermined filtering processing on the vibration signal converted into the digital data. Specifically, the filter processing unit 23 extracts a frequency band including characteristic frequencies corresponding to various specific frequencies of the ball screw 1. As the filter processing unit 23, a low-pass filter is exemplified. However, the filter processing unit 23 is not limited to the low-pass filter. The filter processing unit 23 may be a high-pass filter, a band-pass filter, or a band-stop filter if the filter processing unit 23 is capable of extracting a frequency band including characteristic frequencies corresponding to various specific frequencies of the ball screw 1.

In the present disclosure, a frequency of natural vibration generated because of damage or wear of the screw shaft 11 of the ball screw 1 is set as the characteristic frequency. In the following explanation, the frequency of the natural vibration generated because of damage or wear of the screw shaft 11 of the ball screw 1 is also referred to as "damage frequency of the screw shaft 11".

The damage frequency of the screw shaft 11 can be represented by a value (= Z × fi, hereinafter also simply referred to as "Zfi") obtained by multiplying a relative rotational frequency fi of the screw shaft 11 with respect to a revolution frequency of the rolling body of the nut 12 by a rolling logarithm Z per lead. When an axial rotational frequency of the screw shaft 11 is represented as fr, a rolling body diameter is represented as Dw, a center circle diameter of the rolling body is represented as Da, a screw groove contact angle is represented as $\alpha$, and a lead angle is represented as $\beta$, the damage frequency Zfi of the screw shaft 11 is given by the following Expression (1). The axial rotational frequency fr of the screw shaft 11 can be calculated from a rotational frequency of the motor 15 (a rotational frequency of the screw shaft 11 of the ball screw 1).

$$Zfi = \frac{fr}{2} \times \left(1 + \frac{Dw}{Da} \times \cos\alpha \times \cos^2\beta\right) \times Z \qquad \cdots (1)$$

The rotational frequency of the motor 15 (the rotational frequency of the screw shaft 11 of the ball screw 1) corresponds to moving speed of the nut 12 at the time when the abnormality diagnosis processing of the present disclosure is performed.

In the present disclosure, the abnormality determination unit 25 retains in advance a signal intensity threshold corresponding to the damage frequency Zfi of the screw shaft 11 indicated by the above Expression (1). The abnormality determination unit 25 executes threshold determination processing for a signal intensity threshold corresponding to the damage frequency Zfi of the screw shaft 11 retained in advance and signal intensity corresponding to the damage frequency Zfi acquired by the vibration analysis processing unit 24. In the following explanation, a configuration and an operation of the vibration analysis processing unit 24 according to the embodiment is explained.

The vibration analysis processing unit 24 according to the embodiment includes an envelope processing unit 241, a frequency analysis processing unit 242, and a peak hold averaging processing unit 243. The envelope processing unit 241 executes envelope processing (envelope detection processing) on the vibration signal subjected to the filtering processing in the filter processing unit 23. Specifically, the envelope processing unit 241 executes envelope processing for the vibration signal using, for example, Hilbert transform. The envelope processing unit 241 may execute the envelope processing for the vibration signal, for example, with absolute value detection.

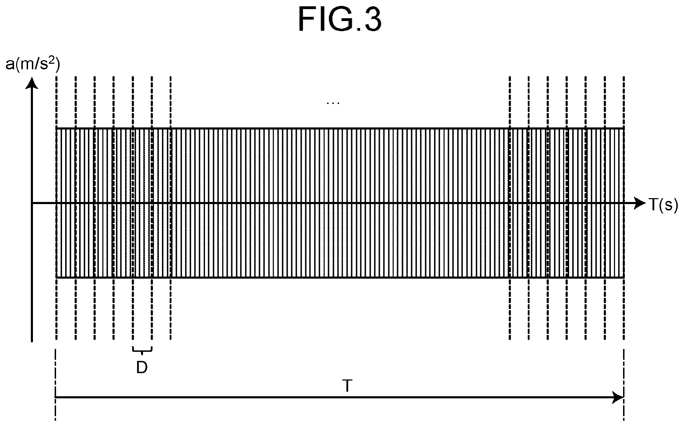

The frequency analysis processing unit 242 performs frequency spectrum analysis processing on a time domain signal. Specifically, the frequency analysis processing unit 242 executes fast Fourier transform (FFT) processing on the time domain signal after the envelope processing. FIG. 3 is an image diagram schematically illustrating a vibration signal acquired in the abnormality diagnosis processing according to the embodiment. In FIG. 3, the horizontal axis indicates time and the vertical axis indicates the magnitude (acceleration a) of the vibration signal.

In FIG. 3, a period during which data is acquired in the abnormality diagnosis processing according to the embodiment is represented as T. Frequency resolution in the FFT processing is determined by a sampling rate (a sampling frequency) and a block size (the number of pieces of sampling data). A sampling period (a time window length) D of the FFT processing in the data acquisition period T is defined by the inverse of the frequency resolution in the FFT processing.

In the abnormality diagnosis processing for a bearing, a gear, and the like, it is general to improve an SN ratio by executing arithmetic mean processing for the frequency domain data (a signal after the FFT processing) acquired a plurality of times in the data acquisition period T. However, in determination of damage or wear of the screw shaft 11 of the ball screw 1 set as an abnormality diagnosis target in the present disclosure, it is necessary to move the nut 12 over the entire region of the screw shaft 11. Therefore, the frequency domain data acquired a plurality of times in the data acquisition period T is respectively data of vibration acquired at different positions of the screw shaft 11. For this reason, it is likely that the signal intensity corresponding to the damage frequency Zfi of the screw shaft 11 is attenuated by the arithmetic mean processing and an abnormality such as damage or wear that has occurred in a part of the screw shaft 11 cannot be detected. In the following explanation, a concept of vibration analysis processing according to the present disclosure is explained.

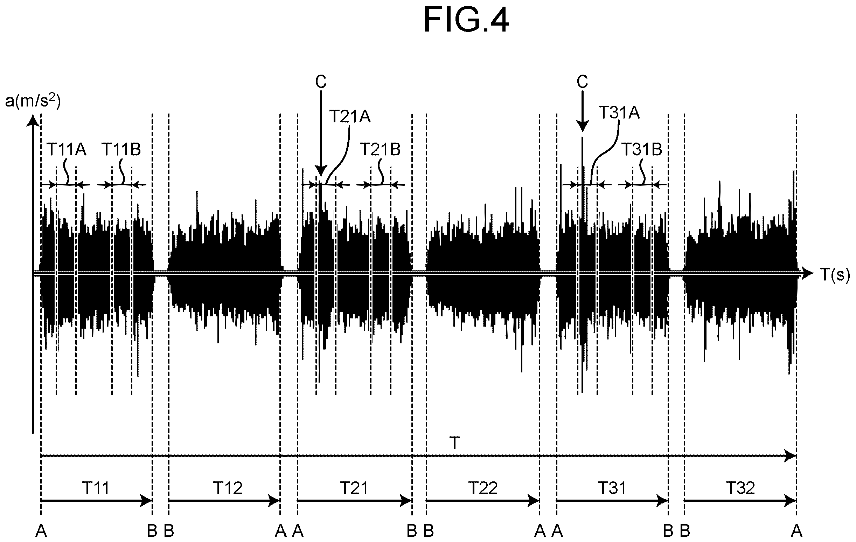

FIG. 4 is a diagram illustrating a specific example of a vibration signal acquired in the abnormality diagnosis processing according to the embodiment. In the example illustrated in FIG. 4, an example in which the nut 12 is reciprocated three times between the A end and the B end illustrated in FIG. 1 in the data acquisition period T is illustrated.

In the example illustrated in FIG. 4, in a period T21 and a period T31, the magnitude (acceleration a) of the vibration signal is an abnormal value at a point C close to the A end. At this point C, it is likely that the screw shaft 11 is damaged or worn.

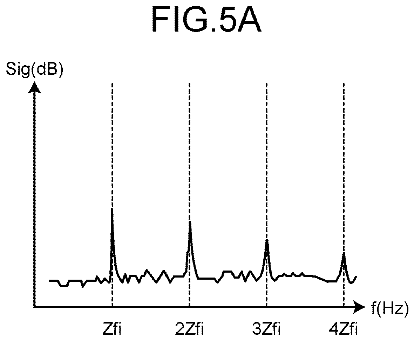

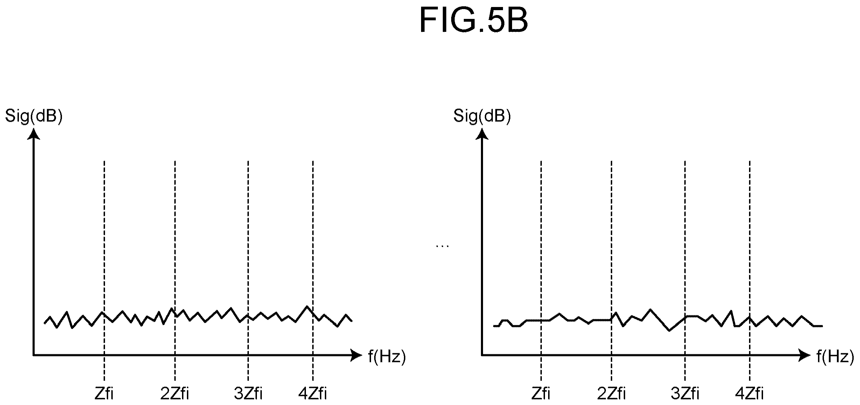

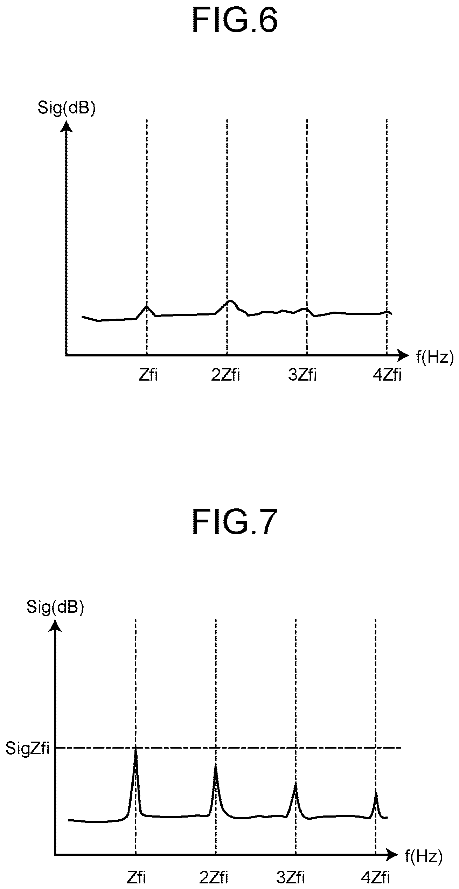

FIG. 5A and FIG. 5B are schematic diagrams illustrating an example of frequency domain data acquired by the FFT processing. FIG. 6 is a schematic diagram illustrating an example of frequency domain data after the arithmetic mean processing. FIG. 7 is a schematic diagram illustrating an example of frequency domain data after peak hold averaging processing. In FIG. 5A, FIG. 5B, FIG. 6, and FIG. 7, the horizontal axis indicates a frequency and the vertical axis indicates signal intensity of the frequency domain data.

FIG. 5A exemplifies frequency domain data acquired when the nut 12 is passing a damaged part of the screw shaft 11. When a vibration signal while the nut 12 passes sections T11A, T21A, and T31A in FIG. 4 is subjected to the FFT processing, frequency domain data illustrated in FIG. 5A is acquired. As illustrated in FIG. 5A, in the frequency domain data acquired when the nut 12 is passing the damaged part of the screw shaft 11, the signal intensity of the damage frequency $Zf_i$ of the screw shaft 11, a second harmonic component $2Zf_i$, a third harmonic component $3Zf_i$, a fourth harmonic component $4Zf_i$, and the like of the damage frequency $Zf_i$ is high. However, frequency domain data acquired when the nut 12 is passing a part where there is no damage or wear is slight, as illustrated in FIG. 5B, the signal intensity of frequency components corresponding to the damage frequency $Zf_i$ of the screw shaft 11 and the harmonic components $2Zf_i$, $3Zf_i$, and $4Zf_i$ of the damage frequency $Zf_i$ is low. Note that FIG. 5B exemplifies a plurality of pieces of frequency domain data acquired when the nut 12 is passing a plurality of parts where there is no damage or wear is slight. When the vibration signal while the nut 12 passes sections T11B, T21B, and T31B in FIG. 4 is subjected to the FFT processing, frequency domain data as illustrated in FIG. 5B is acquired.

In such a configuration for performing the abnormality diagnosis for damage, wear, or the like of the screw shaft 11 of the ball screw 1, when the arithmetic mean processing is performed on frequency domain data acquired a plurality of times as illustrated in FIG. 6, it is likely that the signal intensity of the damage frequency $Zf_i$ of the screw shaft 11 and harmonic components $2Zf_i$, $3Zf_i$, and $4Zf_i$ of the damage frequency $Zf_i$ attenuates and an abnormality such as damage or wear that has occurred in a part of the screw shaft 11 cannot be detected.

When only a part of the screw shaft of the ball screw 1 is damaged, when frequency domain data is acquired a plurality of times, most of the frequency domain data is acquired when the nut 12 is passing an undamaged part. That is, most of the frequency domain data has low signal intensity as illustrated in FIG. 5B. When the arithmetic mean processing is performed, the signal intensity after the arithmetic mean processing is attenuated by being affected by the frequency domain data having the low signal intensity. Therefore, it is likely that an abnormality such as damage or wear that has occurred in a part of the screw shaft 11 cannot be detected.

Therefore, in the present disclosure, the peak hold averaging processing unit 243 that executes peak hold averaging processing for the frequency domain data after the FFT processing is provided at a post stage of the frequency analysis processing unit 242 that performs a frequency spectrum analysis for a time domain signal.

Specifically, the peak hold averaging processing unit 243 acquires a maximum value for each frequency (frequency line) at which spectrum data determined by frequency resolution of frequency domain data after the FFT processing should be generated and generates spectrum data illustrated in FIG. 7. Accordingly, it is possible to detect the signal intensity of the damage frequency $Zf_i$ and the harmonic components $2Zf_i$, $3Zf_i$, and $4Zf_i$ generated according to damage or wear that has occurred in a part of the screw shaft 11.

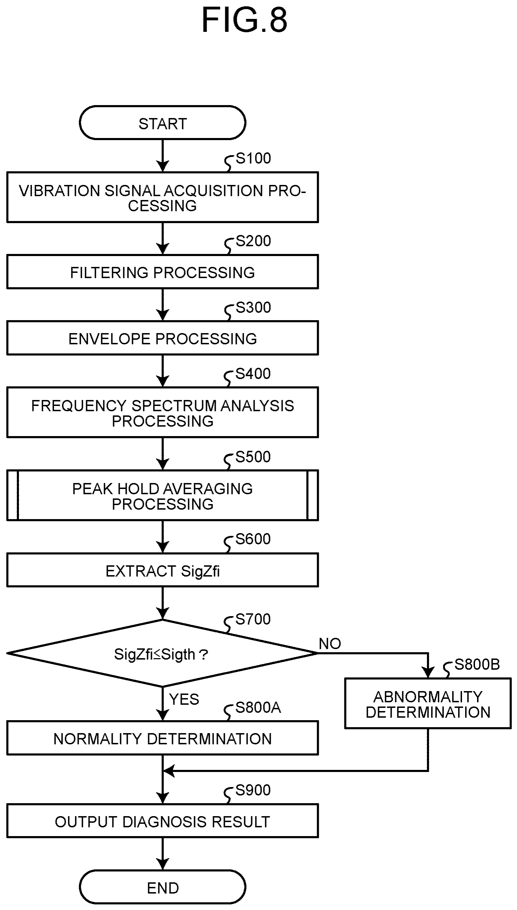

In the following explanation, abnormality diagnosis processing for the ball screw 1 according to the embodiment is explained. FIG. 8 is a flowchart illustrating an example of abnormality diagnosis processing for the ball screw according to the embodiment.

In the abnormality diagnosis system for the ball screw 1 illustrated in FIG. 1, as explained above, the abnormality diagnosis device 2 according to the embodiment executes the vibration analysis processing during the operation of the ball screw 1 to diagnose damage or wear of the screw shaft 11. Specifically, when executing abnormality diagnosis processing for the ball screw 1 according to the embodiment, the abnormality diagnosis device 2 outputs a driving control command and a rotation control command for the motor 15 to a driving control device 3. The driving control device 3 drives the motor 15 based on the control commands from the abnormality diagnosis device 2 to cause the ball screw 1 to operate and moves the nut 12 at speed corresponding to the damage frequency $Zf_i$ of the screw shaft 11 indicated by the above Expression (1) over the entire region of the screw shaft 11. In other words, the driving control device 3 rotates the motor 15 (the screw shaft 11) to have the axial rotational frequency $f_r$ corresponding to the damage frequency $Zf_i$ of the screw shaft 11 indicated by the above Expression (1) over the entire region of the screw shaft 11. Specifically, for example, as illustrated in FIG. 4, the driving control device 3 reciprocates the nut 12 a plurality of times between the A end and the B end illustrated in FIG. 1.

The vibration sensor 21 detects vibration during operation of the ball screw 1. A vibration signal detected by the vibration sensor 21 is converted into digital data by the AD conversion processing unit 22 and acquired (Step S100).

The filter processing unit 23 executes predetermined filtering processing on the vibration signal acquired by the vibration sensor 21 (Step S200). Specifically, the filter processing unit 23 extracts a frequency band including at least characteristic frequencies corresponding to various specific frequencies of the ball screw 1.

The envelope processing unit 241 executes envelope processing on the vibration signal after the filtering processing (Step S300). The frequency analysis processing unit 242 executes fast Fourier transform (FFT) processing on the time domain signal after the envelope processing and performs frequency spectrum analysis processing (Step S400).

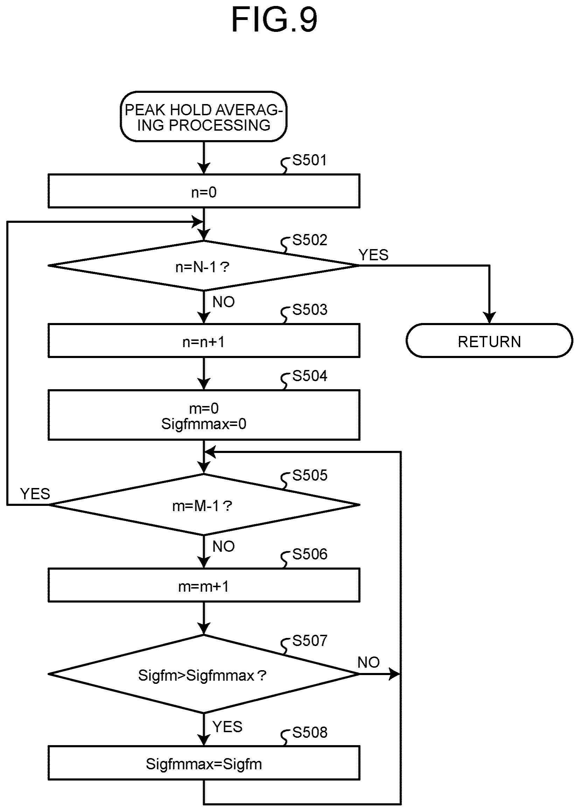

In a data acquisition period T in the abnormality diagnosis processing for the ball screw 1 according to the embodiment (an operation period of the ball screw 1 in the abnormality diagnosis processing), frequency domain data after the frequency spectrum analysis processing is sequentially input to the peak hold averaging processing unit 243 for each sampling period (time window length) D defined by the inverse of the frequency resolution in the FFT processing. The peak hold averaging processing unit 243 executes the peak hold averaging processing for frequency domain data acquired in sampling periods D (Step S500). FIG. 9 is a sub-flowchart illustrating an example of the peak hold averaging processing.

In FIG. 9, n indicates an integer up to a total number N of frequency domain data acquired in the data acquisition period T. In FIG. 9, m indicates an integer up to a total number M of frequency lines determined by frequency resolution of frequency domain data after the FFT processing. Also, Sigfm indicates signal intensity for each frequency line m.

The peak hold averaging processing unit 243 resets the number n of the frequency domain data acquired in the data acquisition period T (n = 0, Step S501) and determines whether n = N-1 (Step S502). If not n = N-1 (Step S502; No), the peak hold averaging processing unit 243 increments the number n of the frequency domain data (n = n+1, Step S503).

Subsequently, the peak hold averaging processing unit 243 resets the number m of the frequency line and a maximum value Sigfmmax of the signal intensity Sigfm in the frequency line m (m = 0, Sigfmmax = 0, Step S504) and determines whether m = M-1 (Step S505). If not m = M-1 (Step S505; No), the peak hold averaging processing unit 243 increments the number m of the frequency line (m = m+1, Step S506).

When frequency domain data in the sampling period Dn corresponding to the number n is input, the peak hold averaging processing unit 243 determines whether the signal intensity Sigfm of the frequency line m exceeds the maximum value Sigfmmax (Step S507).

When the signal intensity Sigfm exceeds the maximum value Sigfmmax (Sigfm > Sigfmmax, Step S507; Yes), the peak hold averaging processing unit 243 sets the signal intensity Sigfm as the maximum value Sigfmmax in the frequency line m (Step S508), returns to the processing in Step S505, and repeatedly executes the processing in Step S505 and subsequent steps.

When the signal intensity Sigfm is equal to or less than the maximum value Sigfmmax (Sigfm $\leq$ Sigfmmax, Step S507; No), the peak hold averaging processing unit 243 returns to the processing in Step S505, and repeatedly executes the processing in Step S505 and subsequent steps.

When m = M-1 in the processing in Step S505 (Step S505; Yes), the peak hold averaging processing unit 243 returns to the processing in Step S502 and repeatedly executes the processing in Step S502 and subsequent steps. When n = N-1 in the processing in Step S502 (Step S502; Yes), the peak hold averaging processing unit 243 returns to the abnormality diagnosis processing illustrated in FIG. 8. With the peak hold averaging processing illustrated in FIG. 9 explained above, it is possible to acquire the maximum value for each frequency line determined by the frequency resolution of the frequency domain data after the FFT processing and it is possible to generate the spectrum data illustrated in FIG. 7 can be generated.

Referring back to FIG. 8, the abnormality determination unit 25 calculates the axial rotational frequency fr of the screw shaft 11 of the ball screw 1 based on the rotational frequency of the motor 15 (the screw shaft 11), extracts signal intensity SigZfi corresponding to the damage frequency Zfi of the screw shaft 11 indicated by the above Expression (1) (Step S600), and executes comparison determination processing with a signal intensity threshold Sigth retained in advance (Step S700). Specifically, the abnormality determination unit 25 determines whether the signal intensity SigZfi extracted in the processing in Step S600 is equal to or less than the signal intensity threshold Sigth.

In the present disclosure, the signal intensity SigZfi corresponding to the damage frequency Zfi of the screw shaft 11 may be signal intensity having a maximum value within a predetermined range including the damage frequency Zfi of the screw shaft 11. Specifically, the signal intensity SigZfi corresponding to the damage frequency Zfi of the screw shaft 11 is preferably signal intensity having a maximum value in a range of, for example, 0.9Zfi or more and Zfi or less.

When the signal intensity SigZfi extracted in the processing in Step S600 is equal to or less than the signal intensity threshold Sigth (SigZfi $\leq$ Sigth, Step S700; Yes), the abnormality determination unit 25 makes normality determination assuming that no abnormality due to damage or wear of the screw shaft 11 of the ball screw 1, which is set as an abnormality diagnosis target in the present disclosure, has occurred (Step S800A), outputs a diagnosis result of the normality determination (Step S900), and ends the abnormality diagnosis processing.

When the signal intensity SigZfi extracted in the processing in Step S600 exceeds the signal intensity threshold Sigth (SigZfi > Sigth, Step S700; No), the abnormality determination unit 25 makes abnormality determination assuming that an abnormality due to damage or wear of the screw shaft 11 of the ball screw 1, which is set as the abnormality diagnosis target in the present disclosure, has occurred (Step S800B), outputs a diagnosis result of the abnormality determination (Step S900), and ends the abnormality diagnosis processing.

As explained above, with the abnormality diagnosis device 2 and the abnormality diagnosis method for the ball screw 1 according to the embodiment of the present disclosure, it is possible to detect an abnormality such as damage or wear that has occurred in the screw shaft 11 of the ball screw 1.

Reference Signs List

| 1 | BALL SCREW |
|---|---|
| 2 | ABNORMALITY DIAGNOSIS DEVICE |
| 3 | DRIVING CONTROL DEVICE |
| 11 | SCREW SHAFT |
| 12 | NUT |
| 13, 14 | BEARING |
| 15 | MOTOR |
| 21 | VIBRATION SENSOR |
| 22 | AD CONVERSION PROCESSING UNIT |
| 23 | FILTER PROCESSING UNIT |
| 24 | VIBRATION ANALYSIS PROCESSING UNIT |
| 25 | ABNORMALITY DETERMINATION UNIT |
| 241 | ENVELOPE PROCESSING UNIT |
| 242 | FREQUENCY ANALYSIS PROCESSING UNIT |
| 243 | PEAK HOLD AVERAGING PROCESSING UNIT |

**Claims**

1.  An abnormality diagnosis device for a ball screw, the abnormality diagnosis device comprising:

    a vibration sensor that detects vibration during an operation of the ball screw;
    a filter processing unit that executes, on a vibration signal acquired by the vibration sensor, filtering processing for extracting a frequency band including at least a characteristic frequency corresponding to a specific frequency of the ball screw;
    an envelope processing unit that executes envelope processing for the vibration signal after the filtering processing;
    a frequency analysis processing unit that executes fast Fourier transform processing on a time domain signal after the envelope processing;
    a peak hold averaging processing unit that executes peak hold averaging processing for frequency domain data for each sampling period in the fast Fourier transform processing; and
    an abnormality determination unit that performs abnormality determination for the ball screw based on the frequency domain data after the peak hold averaging processing.

2. The abnormality diagnosis device for the ball screw according to claim 1, wherein

the abnormality determination unit
extracts, based on a rotational frequency of a screw shaft of the ball screw, signal intensity corresponding to a damage frequency of the screw shaft and outputs an abnormality determination result of the screw shaft when the signal intensity exceeds a predetermined threshold.

3. The abnormality diagnosis device for the ball screw according to claim 1, wherein

the abnormality determination unit
extracts a maximum value of signal intensity within a predetermined range including a damage frequency of a screw shaft of the ball screw and outputs an abnormality determination result of the screw shaft when the maximum value exceeds a predetermined threshold.

4. An abnormality diagnosis method for a ball screw, the abnormality diagnosis method comprising:

a first step of detecting vibration during an operation of the ball screw;
a second step of executing, on a vibration signal acquired in the first step, filtering processing of extracting a frequency band including at least a characteristic frequency corresponding to a specific frequency of the ball screw;
a third step of executing envelope processing for the vibration signal after the filtering processing;
a fourth step of executing fast Fourier transform processing on a time domain signal after the envelope processing;
a fifth step of executing peak hold averaging processing for frequency domain data for each sampling period in the fast Fourier transform processing; and
a sixth step of performing abnormality determination for the ball screw based on the frequency domain data after the peak hold averaging processing.

5. The abnormality diagnosis method for the ball screw according to claim 4, wherein

in the sixth step,
based on a rotational frequency of a screw shaft of the ball screw, signal intensity corresponding to a damage frequency of the screw shaft is extracted, and an abnormality determination result of the screw shaft is output when the signal intensity exceeds a predetermined threshold.

6. The abnormality diagnosis method for the ball screw according to claim 4, wherein

in the sixth step,
a maximum value of signal intensity within a predetermined range including a damage frequency of a screw shaft of the ball screw is extracted, and an abnormality determination result of the screw shaft is output when the maximum value exceeds a predetermined threshold.

FIG.1

# FIG.2

# FIG.3

# FIG.4

EP 4 722 680 A1

# FIG.5A

FIG.5B

# FIG.6

# FIG.7

# FIG.8

```
                    ┌─────────────┐
                    │    START    │
                    └─────────────┘
                           │
                           ▼          ⌐S100
        ┌──────────────────────────────────────┐
        │  VIBRATION SIGNAL ACQUISITION PRO-    │
        │               CESSING                 │
        └──────────────────────────────────────┘
                           │
                           ▼          ⌐S200
        ┌──────────────────────────────────────┐
        │         FILTERING PROCESSING          │
        └──────────────────────────────────────┘
                           │
                           ▼          ⌐S300
        ┌──────────────────────────────────────┐
        │         ENVELOPE PROCESSING           │
        └──────────────────────────────────────┘
                           │
                           ▼          ⌐S400
        ┌──────────────────────────────────────┐
        │     FREQUENCY SPECTRUM ANALYSIS       │
        │             PROCESSING                │
        └──────────────────────────────────────┘
                           │
                           ▼          ⌐S500
        ┌──────────────────────────────────────┐
        │       PEAK HOLD AVERAGING             │
        │            PROCESSING                 │
        └──────────────────────────────────────┘
                           │
                           ▼          ⌐S600
        ┌──────────────────────────────────────┐
        │           EXTRACT SigZfi              │
        └──────────────────────────────────────┘
                           │
                           ▼          ⌐S700
```

SigZfi ≤ Sigth ?

NO → S800B ABNORMALITY DETERMINATION

YES S800A NORMALITY DETERMINATION

S900 OUTPUT DIAGNOSIS RESULT

END

# FIG.9

```
        ┌─────────────────────────┐
        │ PEAK HOLD AVERAG-       │
        │ ING PROCESSING          │
        └───────────┬─────────────┘
                    │                    ⌐S501
        ┌───────────▼─────────────┐
        │         n=0             │
        └───────────┬─────────────┘
                    │
        ┌───────────▼─────────────┐      ⌐S502
        ◇         n=N-1?          ◇──── YES ────┐
        └───────────┬─────────────┘             │
                    │ NO         ⌐S503          │
        ┌───────────▼─────────────┐             │
        │        n=n+1            │      ┌───────▼────────┐
        └───────────┬─────────────┘      │    RETURN      │
                    │            ⌐S504    └────────────────┘
        ┌───────────▼─────────────┐
        │        m=0              │
        │     Sigfmmax=0          │
        └───────────┬─────────────┘
                    │            ⌐S505
  YES ──◇         m=M-1?          ◇
        └───────────┬─────────────┘
                    │ NO         ⌐S506
        ┌───────────▼─────────────┐
        │        m=m+1            │
        └───────────┬─────────────┘
                    │            ⌐S507
        ◇    Sigfm>Sigfmmax?      ◇──── NO ───►
        └───────────┬─────────────┘
                    │ YES        ⌐S508
        ┌───────────▼─────────────┐
        │    Sigfmmax=Sigfm       │
        └─────────────────────────┘
```

## INTERNATIONAL SEARCH REPORT

| International application No. |
|---|
| **PCT/JP2024/000794** |

**A.    CLASSIFICATION OF SUBJECT MATTER**

*G01M 13/028*(2019.01)i; *F16H 25/24*(2006.01)i; *G01H 17/00*(2006.01)i
FI:    G01M13/028; G01H17/00 A; F16H25/24 E

According to International Patent Classification (IPC) or to both national classification and IPC

**B.    FIELDS SEARCHED**

Minimum documentation searched (classification system followed by classification symbols)

G01M13/00-13/045; F16H25/22-25/24; G01H17/00; G01M99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2004-093185 A (NSK LTD.) 25 March 2004 (2004-03-25) <br> paragraphs [0013]-[0032], [0044], fig. 1-3 | 1-6 |
| Y | WO 2006/043511 A1 (NSK LTD.) 27 April 2006 (2006-04-27) <br> paragraphs [0081]-[0105], fig. 1-8 | 1-6 |
| A | JP 2013-257014 A (NSK LTD.) 26 December 2013 (2013-12-26) <br> entire text, all drawings | 1-6 |

☐ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **01 February 2024** | **13 February 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

International application No.

**PCT/JP2024/000794**

| Patent document cited in search report | | | Publication date (day/month/year) | Patent family member(s) | Publication date (day/month/year) |
|---|---|---|---|---|---|
| JP | 2004-093185 | A | 25 March 2004 | (Family: none) | |
| WO | 2006/043511 | A1 | 27 April 2006 | US 2008/0033695 A1 paragraphs [0221]-[0245], fig. 1-8 | |
| | | | | JP 2006-113002 A | |
| | | | | JP 2006-113003 A | |
| | | | | JP 2006-125976 A | |
| | | | | JP 2006-194629 A | |
| | | | | JP 2007-170815 A | |
| | | | | JP 2007-170816 A | |
| | | | | CN 1926413 A | |
| JP | 2013-257014 | A | 26 December 2013 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4581860 B
- JP 5217743 B